# EUROPEAN PATENT SPECIFICATION

(11) **EP 3 571 239 B1**
(45) Date of publication and mention of the grant of the patent: **01.06.2022**
(21) Application number: 18701647.2
(22) Date of filing: 09.01.2018
(51) Int. Cl.: C08G 18/50, C08G 18/63, C08G 18/76, C08G 18/48

(54) **FLEXIBLE POLYURETHANE FOAM AND PROCESS TO MAKE**
POLYURETHANWEICHSCHAUMSTOFF UND VERFAHREN ZUR HERSTELLUNG
MOUSSE DE POLYURÉTHANNE SOUPLE ET SON PROCÉDÉ DE FABRICATION

(30) Priority: 23.01.2017 US 201762449234 P
(43) Date of publication of application: 27.11.2019
(73) Proprietor: Dow Global Technologies LLC, Midland, MI 48674 (US)
(72) Inventor: GRASSINI, Stefano Carlo E., 8810 Horgen (CH); BIRCH, Adrian J., 8810 Horgen (CH)
(74) Representative: Boult Wade Tennant LLP
(86) International application number: PCT/US2018/012903
(87) International publication number: WO 2018/136258

(56) References cited:
- US-A1- 2004 242 718
- US-A1- 2013 184 368
- US-B2- 6 762 274

## Description

### FIELD OF THE INVENTION

This invention relates to resilient polyurethane foam and methods for preparing those foams.

### BACKGROUND OF THE INVENTION

Flexible polyurethane foams are widely used in cushioning, seating and bedding applications. These foams fall mainly into two types. One type is a "viscoelastic" or "memory" foam, which is characterized by having low resiliency and a time-delayed and rate-dependent response to an applied stress. These foams recover slowly after being compressed, and are used mainly in certain types of bedding applications. The more common type of foam is a resilient foam which, when compressed, rapidly returns the energy used to compress the foam. Resilient foams provide much better support and recover their original shapes rapidly and with force after being compressed. This invention relates to the latter type of resilient foams.

A concern with resilient foams is compression set. Many cushioning foams that are used for seating and bedding applications tend not to recover completely after they are compressed under an applied load. The extent to which they fail to completely recover their original dimensions after the load is removed is referred to as compression set. Large compression sets indicate a significant failure of the foam to recover. Compression set is typically evaluated using a standardized test such as ISO 1856, in which a foam sample is compressed under an applied load under specified conditions, and then released.
Compression set tests such as ISO 1856 can be conducted under high humidity conditions; compression set values obtained in such a manner are often referred to as "wet" compression sets. Wet compression sets are intended to predict the performance of a foam when used under high temperature and humidity conditions, as might be seen, for example, in tropical or semi-tropical climates or in summer months in some temperate areas. Wet compression sets tend to be higher than ambient, or "dry" compression sets. It is generally desirable that foam compression set values be as low as possible, consistent with other necessary foam properties such as resiliency and load-bearing.

There is a continuing demand to provide foams having lower and lower densities. Lower density foams tend to be less expensive (on a per-volume basis) because lesser quantities of raw materials are needed to produce the foam. On the other hand, there is a practical limit to which foam density can be reduced. The physical and mechanical properties of the foam begin to suffer if foam density becomes too low. Resiliency tends to be affected quite significantly as foam density drops. Compression set values also deteriorate badly with decreasing foam density

Therefore, it is desirable to provide a polyurethane foam having a low density which retains good resiliency and low compression set.

In USP 5,549,841, polyurethane foam made using high (≥6) functionality polyols are said to have improved wet compression set properties. The foams are molded foams made in a cold molding process. USP 6,774,153 describes slabstock polyurethane foam made using a polyol which may have a high functionality, together with a 200-600 equivalent weight, high ethylene oxide polyol that has from 2 to 6 hydroxyl groups. The presence of the high ethylene oxide polyol is said to permit the formation of low density foams that have good properties, including a low compression set.

US 2004/242718 relates to a process to manufacture flexible polyurethane foams.

US 2013/184368 relates to a process for making low density high resiliency flexible polyurethane foam.

### BRIEF SUMMARY OF THE INVENTION

The present invention is such a composition and process to form a flexible polyurethane foam. In one embodiment, the present invention is a process to form a flexible polyurethane foam, comprising the reaction product of: a) an A-side comprising i) an organic isocyanate, b) a B-side comprising: i) 5 to 40 weight percent of a copolymer polyol, ii) 30 to 95 weight percent of a polyether polyol having a functionality equal to or greater than 3, iii) 1 to 30 weight percent of an autocatalytic polyol, iv) 0.1 to 5 weight percent of a crosslinker, v) 0.1 to 5 weight percent of a surfactant, vi) 0.01 to 2 weight percent of a hydroxyalkyltriethylenediamine and/or a hydroxytriethylenediamine catalyst, vii) 0.01 to 2 weight percent of a tertiary amine catalyst, and viii) 1 to 5 weight percent water, the B-side weight percents are based on the total weight of the B-side, said process comprising the steps of: A) forming a reactive blend by mixing said A-side and said B-side at 55°C or less in a ratio, (A-side):(B-side), of 20:100 to 80: 100by weight and B) subjecting the resulting reactive blend to conditions sufficient to cure the reactive blend to form a polyurethane foam.

In one embodiment of the process disclosed herein above, the organic isocyanate is 2,4-toluene diisocyanate, 2,6-toluene diisocyanate, a mixtures of 2,4-toluene diisocyanate and 2,6-toluene diisocyanate; 2,4'-diphenylmethane diisocyanate, 2,2'- diphenylmethane diisocyanate, 4,4'-diphenylmethane diisocyanate, a mixture of 2,4'-diphenylmethane diisocyanate, 2,2'- diphenylmethane diisocyanate, 4,4'-diphenylmethane diisocyanate; or mixtures thereof.

In one embodiment of the process disclosed herein above, the crosslinker IV) comprises 0.1 to 5 weight percent diethanolamine and 0.1 to 5 weight percent glycerine.

In one embodiment of the process disclosed herein above, the hydroxyalkyltriethylenediamine catalyst b) VI) is 1, 4-diazabicyclo [2.2.2] octane-2-methanol and the tertiary amine catalyst b) vii) is N, N, N'-trimethyl-N'-hydroxyethyl-bisaminoethylether.

In one embodiment of the process disclosed herein above, the ratio of b) VI) :b) vii) is within the range of 60:10 to 10:10.

In one embodiment of the process disclosed herein above, the flexible polyurethane foam is used in a low emission automobile seating application.

### DETAILED SUMMARY OF THE INVENTION

The present invention is a low emissions flexible polyurethane foam having low compression set values. As used herein, a flexible polyurethane foam is made by a process of reacting an A-side and a B-side together, wherein the A-side comprises an isocyanate-containing material and the B-side comprises a polyol-containing material, usually a blend of polyol, cross-linker, water, catalysts, surfactants, and the like. The process according to the present invention contacts (a) an A-side comprising, consisting essentially of, or consisting of a (i) an organic isocyanate, preferably MDI, TDI, or mixtures thereof with (b) a B-side comprising, consisting essentially of, or consisting of a polyol blend comprising, consisting essentially of, or consisting of i) a copolymer polyol, ii) a polyether polyol having a functionality equal to or greater than 3, iii) an autocatalytic polyol, iv) a crosslinker, v) a surfactant, vi) a hydroxyalkyltriethylenediamine and/or a hydroxytriethylenediamine catalyst, vii) a tertiary amine catalyst, and viii) water, preferably wherein the ratio of b)vii):b)viii) is within the range of 60:10 to 10:10. The A-side is mixed, preferably at ambient temperature, with the B-side to form (c) a reactive blend. The resulting reactive blend is subjected to conditions sufficient to cure the reactive blend to form a flexible polyurethane foam.

Suitable organic isocyanates (a)(i) for use in the composition and process of the present invention include any of those known in the art for the preparation of polyurethane foams, like aliphatic, cycloaliphatic, araliphatic and, preferably, aromatic isocyanates. Aromatic polyisocyanates are generally preferred based on cost, availability and properties imparted to the product polyurethane. Exemplary polyisocyanates include, for example, m-phenylene diisocyanate, 2,4- and/or 2,6-toluene diisocyanate (TDI), the various isomers of diphenylmethanediisocyanate (MDI), hexamethylene-1,6-diisocyanate, tetramethylene-1,4-diisocyanate, cyclohexane-1,4-diisocyanate, hexahydrotoluene diisocyanate, hydrogenated MDI (H₁₂ MDI), naphthylene-1,5-diisocyanate, methoxyphenyl-2,4-diisocyanate, 4,4'-biphenylene diisocyanate, 3,3'-dimethoxy-4,4'-biphenyl diisocyanate, 3,3'-dimethyldiphenylmethane-4,4'-diisocyanate, 4,4',4"-triphenylmethane tri-isocyanate, polymethylene polyphenylisocyanates or mixtures thereof with MDI (polymeric MDI), hydrogenated polymethylene polyphenylisocyanates, toluene-2,4,6-triisocyanate, and 4,4'-dimethyl diphenylmethane-2,2',5,5'-tetraisocyanate. Preferred polyisocyanates include MDI and derivatives of MDI such as biuret-modified "liquid" MDI products and polymeric MDI, as well as mixtures of the 2, 4- and 2, 6- isomers of TDI. An especially preferred polyisocyanate is a mixture of TDI isomers with MDI or polymeric MDI, in which the TDI isomers constitutes from 60 to 90% by weight of the mixture, and in which the 2,4-TDI isomer constitutes at least 70% by weight of the TDI isomers. Such an isocyanate product is available as VORANATE^{™} TM-20 from The Dow Chemical Company.

Preferably the organic polyisocyanate or mixture thereof has an average of 1.8 or more isocyanate groups per molecule. The isocyanate functionality is preferably from about 1.9 to 4, and more preferably from 1.9 to 3.5 and especially from 1.9 to 2.7.

Preferably, the organic isocyanate in the flexible polyurethane composition of the present invention is 2,4-toluene diisocyanate, 2,6-toluene diisocyanate, a mixtures of 2,4-toluene diisocyanate and 2,6-toluene diisocyanate; 2,4'-diphenylmethane diisocyanate, 2,2'-diphenylmethane diisocyanate, 4,4'-diphenylmethane diisocyanate, a mixture of 2,4'-diphenylmethane diisocyanate, 2,2'- diphenylmethane diisocyanate, 4,4'-diphenylmethane diisocyanate; or mixtures thereof.

The amount of polyisocyanate that is used typically is sufficient to provide an isocyanate index of from 70 to 125. A preferred range is from 80 to 115 and a more preferred range is from 90 to 105. Isocyanate index is 100 times the ratio of isocyanate groups to isocyanate-reactive groups in the formulation.

The B-side comprises a polyol blend comprising (b) (i) a copolymer polyol, (b) (ii) a polyether polyol, preferably having a functionality equal to or greater than 3, and (b) (iii) an autocatalytic aromatic polyol. Modified polyols, often referred to as "copolymer polyols" have been fully described in the prior art and include products obtained by the in situ polymerization of one or more vinyl monomers, for example styrene and acrylonitrile, in polymeric polyols, for example polyether polyols, or by the in situ reaction between a polyisocyanate and an amino- or hydroxy-functional compound, such as triethanolamine, in a polymeric polyol.

The polymer modified polyols which are particularly interesting in accordance with the invention are products obtained by in situ polymerization of styrene and/or acrylonitrile in polyoxyethylene polyoxypropylene polyols and products obtained by in situ reaction between a polyisocyanate and an amino or hydroxy-functional compound (such as triethanolamine) in a polyoxyethylene polyoxypropylene polyol.

Polyoxyalkylene polyols containing from 5 to 50 percent of dispersed polymer are particularly useful. Particle sizes of the dispersed polymer of less than 50 microns are preferred. Mixtures of such isocyanate-reactive components may be used as well. Most preferably polyols are used which do not comprise primary, secondary or tertiary nitrogen atoms.

The copolymer polyol is typically present in the B-side an amount equal to or greater than 5 weight percent, preferably equal to or greater than 10 weight percent, and more preferably equal to or greater than 15 weight percent based on the total weight of the B-side. The copolymer polyol is typically present in the B-side an amount equal to or less than 50 weight percent, preferably equal to or less than 40 weight percent, and more preferably equal to or less than 30 weight percent based on the total weight of the B-side.

The polyol blend comprises a polyether polyol (b) (ii). Suitable polyether polyols have been fully described in the prior art and include reaction products of alkylene oxides, for example ethylene oxide and/or propylene oxide, with initiators having a functionality of from 2 to 8, preferably 3 to 8, and an average hydroxyl number preferably from about 5 to 100, more preferably from about 10 to 80, and more preferably 15 to 60. Of particular importance for the preparation of the flexible polyurethane foams of the present invention are polyether polyols and polyol mixtures having a functionality equal to or greater than 3 and equal to and less than 8. Preferably, the polyol or polyols have an average molecular weight of from 100 to 10,000, more preferably of from 200 to 8,000.

Suitable initiators for the present invention include: polyols, for example ethylene glycol, diethylene glycol, propylene glycol, dipropylene glycol, butane diol, glycerol, trimethylolpropane, triethanolamine, pentaerythritol, sorbitol and sucrose; polyamines, for example ethylene diamine, tolylene diamine, diaminodiphenylmethane and polymethylene polyphenylene polyamines; and aminoalcohols, for example ethanolamine and diethanolamine; and mixtures of such initiators. Other suitable polyols include polyesters obtained by the condensation of appropriate proportions of glycols and higher functionality polyols with polycarboxylic acids. Still further suitable polyols include hydroxyl terminated polythioethers, polyamides, polyesteramides, polycarbonates, polyacetals, polyolefins and polysiloxanes. Still further suitable isocyanate-reactive components include ethylene glycol, diethylene glycol, propylene glycol, dipropylene glycol, butane diol, glycerol, trimethylolpropane, ethylene diamine, ethanolamine, diethanolamine, triethanolamine and the other initiators mentioned before. Mixtures of such isocyanate-reactive components may be used as well. Most preferably polyols are used which do not comprise primary, secondary or tertiary nitrogen atoms.

Of particular importance for the preparation of the flexible polyurethane foams of the present invention are polyether polyols and polyol mixtures having a hydroxyl number of equal to or lower than 100, preferably equal to or lower than 80, more preferably equal to or lower than 60. Hydroxyl number indicates the number of reactive hydroxyl groups available for reaction. It is expressed as a number of milligrams of potassium hydroxide equivalent to the hydroxyl content of one gram of polyol.

Of particular importance for the preparation of the flexible foams are reaction products of alkylene oxides, for example ethylene oxide and/or propylene oxide, with initiators containing from 2 to 8, preferably 3 to 8 active hydrogen atoms per molecule. Suitable initiators include: polyols, for example ethylene glycol, diethylene glycol, propylene glycol, dipropylene glycol, butane diol, glycerol, trimethylolpropane, triethanolamine, pentaerythritol and sorbitol; polyamines, for example ethylene diamine, tolylene diamine, diaminodiphenylmethane and polymethylene polyphenylene polyamines; and aminoalcohols, for example ethanolamine and diethanolamine; and mixtures of such initiators. Other suitable polyols include polyesters obtained by the condensation of appropriate proportions of glycols and higher functionality polyols with polycarboxylic acids. Still further suitable polyols include hydroxyl terminatedpolythioethers, polyamides, polyesteramides, polycarbonates, polyacetals, polyolefins and polysiloxanes. Preferred polyols are the polyether polyols comprising ethylene oxide and/or propylene oxide units and most preferably polyoxyethylene polyoxypropylene polyols having an oxyethylene content of at least 10 percent and preferably 10 to 85 percent by weight. A preferred isocyanate-reactive component comprises an ethylene-oxide capped polyether polyol.

Typically, the polyether polyol (b) (ii) is present in the B-side in an amount equal; to or greater than 30 weight percent, preferably equal to or greater than 40 weight percent, and more preferably equal to or greater than 50 weight percent based on the total weight of the B-side. The polyether polyol (b) (ii) is present in the B-side in an amount equal; to or less than 95 weight percent, preferably equal to or less than 90 weight percent, more preferably equal to or less than 80 weight percent, and more preferably equal to or less than 70 weight percent based on the total weight of the B-side

The polyol blend further comprises (b) (iii) an autocatalytic polyol compound, such as those disclosed in USP 8,957,123; 7,361,695; and 6,762,274. In one embodiment, the autocatalytic polyol compound is a polyol containing at least one tertiary amine group having a functionality of 1 to 8, preferably 2 to 8, more preferably 2 to 6, and a hydroxyl number of from 15 to 200. Aliphatic or aromatic amine based polyether polyols may be used in the invention include those made from reacting an aliphatic or an aromatic amine with one or more alkylene oxides.

In one embodiment, the autocatalytic polyol useful in the process of the present invention is an autocatalytic polyol compound having a functionality in the range of 2 to 8 and a hydroxyl number in the range of 15 to 200, wherein said autocatalytic polyol compound comprises at least one tertiary amine group, and said autocatalytic polyol being an amine initiated polyol obtained by alkoxylation of at least one initiator molecule selected from the group consisting of 3,3'-diamino-N-methyldipropylamine, 2,2'-diamino-N-methyldiethylamine, 2,3-diamino-N-methyl-ethyl-propylamine, or a mixture thereof.

In another embodiment, the autocatalytic polyol useful in the process of the present invention is an autocatalytic polyol compound based on an initiator of the following formula:

Hₘ A-(CH₂)ₙ -N(R)-(CH₂)ₚ -AHₘ I

where n and p are independently integers from 2 to 6,
A at each occurrence is independently oxygen, nitrogen or hydrogen, with the proviso that only one of A can be hydrogen at one time,
R is a C₁ to C₃ alkyl group, and
m is equal to 0 when A is hydrogen, is 1 when A is oxygen, and is 2 when A is nitrogen.

In another embodiment, the autocatalytic polyol useful in the process of the present invention is an autocatalytic polyol compound which contains an alkyl amine of within the polyol chain or a di-alkylylamino group pendant to the polyol chain wherein the polyol chain is obtained by copolymerization of at least one monomer containing an alkyl aziridine or N,N-dialkyl glycidylamine with at least one alkylene oxide, preferably the alkyl or di-alkyl moiety of the amine is a C₁ to C₃ alkyl.

Useful aromatic amine based polyether polyols include those based on 1,2-, 1,3- and 1,4- phenylenediamine; 2,3-, 2,4-, 3,4- and 2,6-toluene diamine (TDA); 4,4'-, 2,4'- and 2,2'-diaminodiphenylmethane (DADPM); and/or polyphenyl-polymethylene-polyamine initiators. The alkoxylated aromatic amine polyols may contain alkoxylation products derived from other ingredients in the initiator mixture. In most cases they contain alkoxylation products of lower molecular weight diols and triols such as diethylene glycol, glycerine and/or water. In addition, the aromatic amine based polyether polyol may contain lower molecular weight diols and triols such as diethylene glycol, dipropylene glycol and/or glycerine. Aromatic amine based polyether polyols such as TDA-based polyether polyols and diaminodiphenylmethane or polymethylene polyphenylene polyamine (DADPM) - based polyether polyols have been described as suitable isocyanate-reactive compounds for rigid polyurethane foams (see, for example, EP 421269; 617068, and 708127; WO 94/25514, and USP 5523333; 5523332; and 5523334)

TDA-based polyether polyols for use in the present invention generally have OH numbers in the range of about 350 to about 810, preferably about 350 to about 470 mg KOH/g, more preferably about 350 to about 430 mg KOH/g and have functionalities in the range of about 3.7 to about 4.0, preferably about 3.9. The molecular weight is generally between about 280 to about 640 g/mol. TDA-based polyether polyols having this range of functionalities and OH values are well known in the art. TDA-based polyether polyols which may be used in the present invention are obtained by the addition of alkylene oxides, such as ethylene oxide and/or propylene oxide to one or more of the various isomers of toluene diamine such as 2,4- , 2,6-, 2,3- and 3,4-TDA. Preferably 2,3- and/or 3,4-TDA (ortho-TDA or vicinal TDA) is used as initiator with up to 25 wt% of total initiator of meta-TDA (2,4- and/or 2,6-TDA). Vicinal TDA is a pure isomer or mixture thereof, preferably containing about 20 to about 80 wt% 2,3-TDA and about 80 to about 20 wt% 3,4-TDA. Other co-initiators can be used additionally in an amount up to about 60 % by weight of total initiator, preferably between about 5 and about 10 % by weight.

The range of the autocatalytic polyol is dependent on the desired reactivity profile that is needed. Typically, the autocatalytic polyol compound (b)(iii) is present in the B-side in an amount equal; to or greater than 1 weight percent, preferably equal to or greater than 2 weight percent, and more preferably equal to or greater than 5 weight percent based on the total weight of the B-side. The autocatalytic polyol compound (b)(iii) is present in the B-side in an amount equal; to or less than 50 weight percent, preferably equal to or less than 40 weight percent, and more preferably equal to or less than 30 weight percent based on the total weight of the B-side.

The B-side comprises one or more crosslinker (b)(iv), which preferably is used, in an amount of from 0.1 weight percent up to 5 weight percent based on the total weight of the B-side. The crosslinker contains at least three isocyanate-reactive groups per molecule and has an equivalent weight, per isocyanate-reactive group, of from 30 to about 125 and preferably from 30 to 75. Aminoalcohols such as monoethanolamine, diethanolamine and triethanolamine are preferred types, although compounds such as glycerine, trimethylolpropane and pentaerythritol also can be used. In one embodiment of the present invention the crosslinker comprises diethanolamine and glycerine. Each crosslinker is typically present in an amount equal to or greater than 0.1 weight percent, preferably equal to or greater than 0.2 weight percent, and more preferably equal to or greater than 0.5 weight percent based on the total weight of the B-side. Each crosslinker is typically present in an amount equal to or less than 5 weight percent, preferably equal to or less than 2 weight percent, and more preferably equal to or less than 1 weight percent based on the total weight of the B-side.

The B-side comprises one or more surfactant (b)(v). A surfactant is preferably included in the foam formulation to help stabilize the foam as it expands and cures. Examples of surfactants include nonionic surfactants and wetting agents such as those prepared by the sequential addition of propylene oxide and then ethylene oxide to propylene glycol, solid or liquid organosilicones, and polyethylene glycol ethers of long chain alcohols. Ionic surfactants such as tertiary amine or alkanolamine salts of long chain alkyl acid sulfate esters, alkyl sulfonic esters and alkyl arylsulfonic acids can also be used. The surfactants prepared by the sequential addition of propylene oxide and then ethylene oxide to propylene glycol are preferred, as are the solid or liquid organosilicones. Examples of useful organosilicone surfactants include commercially available polysiloxane/polyether copolymers such as TEGOSTAB^{™} B-8729, B-8404, B-8736, B-8870, and B-8719LF available from Evonik. DABCO^{™} DC -198 available from The Dow Chemical Company, and NIAX^{™} L2171 surfactant from Momentive Performance Materials. Non-hydrolyzable liquid organosilicones are more preferred.

Each surfactant is typically present in an amount equal to or greater than 0.1 weight percent, preferably equal to or greater than 0.2 weight percent, and more preferably equal to or greater than 0.5 weight percent based on the total weight of the B-side. Each surfactant is typically present in an amount equal to or less than 5 weight percent, preferably equal to or less than 2 weight percent, and more preferably equal to or less than 1.3 weight percent based on the total weight of the B-side.

The B-side comprises at least one hydroxyalkyltriethylenediamine and/or hydroxytriethylenediamine catalyst (b)(vi). Hydroxyalkyltriethylenediamine and hydroxytriethylenediamine catalysts are well known, for example see US Publication No. 2011/0077376.

Suitable hydroxyalkyltriethylenediamine catalysts are represented by the following formula: 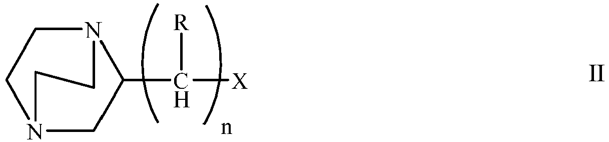 wherein R is a hydrogen atom or a linear or branched C₁ to C₄ alkyl group, n is an integer of from 0 to 6, and X is -OH or -NHR' where R' may be H or branched or linear alkyl group with 1 to 10 carbons.

A preferable hydroxyalkyltriethylenediamine catalyst is where R is hydrogen, n is 1, and R' is -OH (1,4-diazabicyclo[2.2.2]octane-2-methanol): 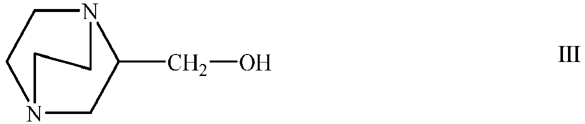 1,4-diazabicyclo[2.2.2]octane-2-methanol is available as RZETA^{™} from Tosoh Corporation.

Suitable hydroxytriethylenediamine catalysts are represented by the following formula: 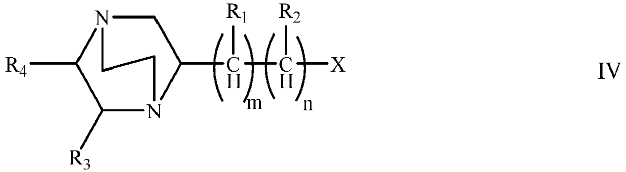 wherein each of R₁, R₂, R₃, and R₄ which are independent of each other, is a hydrogen atom or a linear or branched C₁ to C₄ alkyl group, each of m and n are independent of each other, is an integer of from 0 to 2, provided m + n is less than 4, and X is as defined herein above.

The range of the hydroxyalkyltriethylenediamine or hydroxytriethylenediamine catalyst is dependent on the desired reactivity profile that is needed. Hydroxyalkyltriethylenediamine or hydroxytriethylenediamine catalyst are typically used in an amount of 0.01 to 5 weight percent based on the total weight of the B-Side. Preferably the hydroxyalkyltriethylenediamine or hydroxytriethylenediamine catalyst is present in an amount equal to or greater than 0.01 weight percent, preferably equal to or greater than 0.1 weight percent, more preferably equal to or greater than 0.15 weight percent, and more preferably equal to or greater than 0.2 weight percent based on the total weight of the B-side. Preferably the hydroxyalkyltriethylenediamine or hydroxytriethylenediamine catalyst is present in an amount equal to or less than 5 weight percent, more preferably equal to or less than 2 weight percent, more preferably equal to or less than 1.5 weight percent, and more preferably equal to or less than 1 weight percent based on the total weight of the B-side.

The B-side comprises at least one tertiary amine catalyst (b)(vii), which may be selected from any effective tertiary amine. Such selections such may typically include the N-alkylmorpholines, N-alkylalkanolamines, aminoalcohols, N,N-dialkylcyclohexylamines, alkylamines where the alkyl groups are methyl, ethyl, propyl, butyl and isomeric forms thereof, and heterocyclic amines. Non-limiting specific examples thereof include 1-methylimidazole, triethylenediamine, tetramethylethylenediamine, bis(2-dimethylaminoethyl)ether, triethanolamine, triethylamine, tripropylamine, triisoprpylamine, tributylamine, triamylamine, pyridine, quinoline, dimethylpiperazine, N,N-dimethylcyclohexyl-amine, N-ethyl-morpholine, methyltriethylene-diamine, N,N',N"-tris(dimethylaminopropyl)-sym-hexahydrotriazine, and combinations thereof. A preferred group of tertiary amines comprises 1-methyl-imidazole, 2-ethyl-4-methyl-imidazole, 2-ethylbutyldiisopropylamine, triethylenediamine, triethylamine, triisopropylamine, and combinations thereof.

The tertiary amine catalyst may be any compound possessing catalytic activity for the reaction between a polyol and an organic polyisocyanate and at least one tertiary amine group. Representative tertiary amine catalysts include trimethylamine, triethylamine, dimethylethanolamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, bis(2-dimethylaminoethyl) ether, morpholine,4,4'-(oxydi-2,1-ethanediyl)bis, triethylenediamine, pentamethyl diethylene triamine, dimethyl cyclohexyl amine, N-acetyl N,N-dimethyl amine, N-coco-morpholine, N,N-dimethyl aminomethyl N-methyl ethanol amine, N, N, N'-trimethyl-N'-hydroxyethyl bis(aminoethyl) ether, N,N-bis(3-dimethyl-aminopropyl)N-isopropanolamine, (N,N-dimethyl) amino-ethoxy ethanol, N, N, N', N'-tetramethyl hexane diamine, 1,8-diazabicyclo-5,4,0-undecene-7, N,N-dimorpholinodiethyl ether, N-methyl imidazole, dimethyl aminopropyl dipropanolamine, bis(dimethylaminopropyl)amino-2-propanol, tetramethylamino bis (propylamine), (dimethyl(aminoethoxyethyl))((dimethyl amine)ethyl)ether, tris(dimethylamino propyl) amine, dicyclohexyl methyl amine, bis(N,N-dimethyl-3-aminopropyl) amine, and 1,2-ethylene piperidine and methyl-hydroxyethyl piperazine. Preferred tertiary amine catalysts are one or more of N,N,N'-trimethyl-N'-hydroxyethyl-bisaminoethylether (available as JEFFCAT^{™} ZF-10 from Huntsman Corporation and as TOYOCAT^{™} RX 10 from Tosoh Corporation), N,N-bis(3-dimethylaminopropyl)- N-isopropanolamine (JEFFCAT ZR-50), N-(3-dimethylaminopropyl)-N, N-diisopropanolamine (JEFFCAT DPA), 1,3-propanediamine, N'-(3- (dimethylamino) propyl)-N,N-dimethyl (JEFFCAT Z-130), N,N,N'-trimethylaminoethyl-ethanolamine (JEFFCAT Z-110), bis-(2-dimethylaminoethyl)ether (JEFFCAT ZF-20), N,N-dimethylethanolamine (DMEA), benzyldimethylamine (BDMA), N,N-dimethylcyclohexylamine (DMCHA), pentamethyldiethylenetriamine (PMDETA), N,N,N',N",N"-pentamethyl-dipropylenetriamine (JEFFCAT ZR-40), and dimethylaminopropyl amine (DMAPA).

Tertiary amine catalysts are typically used in an amount of 0.01 to 5 weight percent based on the total weight of the B-Side. Preferably the tertiary amine catalyst is present in an amount equal to or greater than 0.01 weight percent, preferably equal to or greater than 0.1 weight percent, more preferably equal to or greater than 0.15 weight percent, and more preferably equal to or greater than 0.2 weight percent based on the total weight of the B-side. Preferably the tertiary amine catalyst is present in an amount equal to or less than 5 weight percent, preferably equal to or less than 2 weight percent, more preferably equal to or less than 1 weight percent, and more preferably equal to or less than 0.5 weight percent based on the total weight of the B-side.

In one embodiment of the present invention, the hydroxyalkyltriethylenediamine and/or hydroxytriethylenediamine catalyst (b)(vi) and the tertiary amine catalysts (b)(vii) are present in a ratio ((b)(vii):(b)(viii)) in the range of 60:10 to 10:10. Preferably the ratio is 60:10, more preferably the ratio of 50:10, more preferably the ratio of 40: 10more preferably the ratio of 32:12, more preferably the ratio of 30:12. more preferably the ratio of 30:15, most preferably the ratio of 25:15, and more preferably 10:10.

Not to be held to any specific theory, we believe the ability to produce the low emissions flexible polyurethane foam of the present invention having low compression set values is due to the combination of the hydroxyalkyltriethylenediamine and/or hydroxytriethylenediamine catalyst (b)(vi) and tertiary amine catalyst (b)(vii) in combination with a autocatalytic polyol, all described herein above, more specifically with in the ratio ((b)(vii):(b)(viii)) of 60:10 to 10:10.

The B-side further comprises water (b)(viii) which, as is well known, may perform both a blowing function and/or chain extension function by reacting with isocyanate groups to generate carbon dioxide and form urea linkages. Water is preferably the sole blowing agent in the foam formulation, although it is possible to include an auxiliary blowing agent within the foam formulation, in addition to the water. The auxiliary blowing agent may be a chemical type such as a carbamate or a physical blowing agent such as, for example, carbon dioxide or a low-boiling hydrocarbon, hydrofluorocarbon or hydrochlorofluorocarbon. In the preferred case in which water is the sole blowing agent, the amount of water is an important contributing factor to the density of the resulting foam.

The water is typically present in an amount equal to or greater than 1 weight percent, preferably equal to or greater than 2 weight percent, more preferably equal to or greater than 3 weight percent based on the total weight of the B-side. The water is typically present in an amount equal to or less than 15 weight percent, preferably equal to or less than 10 weight percent, more preferably equal to or less than 5 weight percent based on the total weight of the B-side.

As component (ix) the A-side and/or the B-side may have one or more additional types of other materials, as may be useful in the particular manufacturing process that is used or to impart desired characteristics to the resulting foam. These include, for example, catalysts, blowing agents, cell openers, surfactants, crosslinkers, chain extenders, fillers, colorants, fire retardants, pigments, antistatic agents, reinforcing fibers, antioxidants, preservatives, acid scavengers, and the like. The flexible polyurethane foam formulation may contain one or more other catalysts, in addition to the tertiary amine catalyst mentioned before. Of particular interest among these are tin carboxylates and tetravalent tin compounds. Examples of these include stannous octoate, dibutyl tin diacetate, dibutyl tin dilaurate, dibutyl tin dimercaptide, dialkyl tin dialkylmercapto acids, dibutyl tin oxide, dimethyl tin dimercaptide, dimethyl tin diisooctylmercaptoacetate, and the like.

To manufacture the flexible isocyanate-based polymer foam of the present invention, a reactive formulation is prepared, said reactive formulation comprising: an A-side comprising (a)(i) an organic isocyanate, preferably MDI, TDI, or mixtures thereof, more preferably TDI. The B-side, comprises a polyol blend comprising (b)(i) a copolymer polyol, (b)(ii) a polyether polyol with a functionality equal to or greater than 3, and (b)(iii) an autocatalytic polyol; (b)(iv) at least one crosslinker, (b)(v) at least one surfactant, (b)(vi) a hydroxyalkyltriethylenediamine and/or a hydroxytriethylenediamine catalyst, (b)(vii) a tertiary amine catalyst; (viii) water, and optionally (b)(ix) one or more additional component selected from a catalyst, a cell opener, a crosslinker, a chain extender, a flame retardant, a filler, a colorant, a pigment, an antistatic agent, reinforcing fibers, an antioxidant, a preservative, and/or an acid scavenger. Preferably, the A-side and B-side are mixed together at 50°C or lower, preferably ambient temperature (10°C to 40°C) at the desired ratio, forming the reactive formulation which, when mixed, allows for the foaming reaction to occur. Preferably the A-side:B-side ratio is 20:100 to 80:100 by weight. The polyol premix (B-side) and the organic polyisocyanate component (A-side) are mixed together by any known urethane foaming equipment. The resulting reactive formulation is subjected to conditions sufficient to cure the reactive formulation to form a flexible isocyanate-based polymer foam.

In a molding process, the reaction mixture is formed and then dispensed into a closed mold where curing occurs. Enough of the reaction mixture is charged to the mold so that the mixture expands and fills the mold and produces a foam having the aforementioned density. The mold may be preheated, such as to a temperature of from about 40°C to 80°C. The filled mold may be further heated, such as by placing the filled mold into an oven to cure the foam. Such a process is commonly known as a "hot molding" process. In a preferred process, the foam formulation is allowed to cure in the mold without further heating (a "cold mold" process). The mixture is cured in the mold until it can be removed without damage or permanent distortion. The demolded foam can be post cured.

Foam made in accordance with the invention advantageously has a core density in the range of 35 to 70 kg/m³. Density is conveniently measured according to ISO 845, after removing any exterior skin that may be formed during the foaming process. The foam a resilient flexible type.

An advantage of the invention is that the foams exhibit low compression sets, even at low foam core densities in the range of 45 to 55 kg/m³ and lower compression set values are associated with low emission type foams. The lower compression sets are seen in both "dry" and "wet" compression set testing.

Foam made in accordance with the invention are useful in a variety of packaging, seating, and other cushioning applications, such as mattresses, furniture cushions, automotive seating, bumper pads, sport and medical equipment, helmet liners, pilot seats, earplugs, and various other noise and vibration dampening applications.

The following examples are provided to illustrate the invention, but are not intended to limit the scope thereof. All parts and percentages are by weight unless otherwise indicated.

### EXAMPLES

Examples 1 to 5 comprise a formulated polyol blend reacted with TDI. The TDI has an isocyanate content of about 48 % by weight. The polyol blend (B-side) and polymeric TDI (A-side) are mixed in a polyurethane dispense machine. This dispense machine is a standard machine that is available in the market for example from equipment Suppliers like Henneke, Krauss Maffei and Cannon.

The dispense machine is capable of mixing the system at the given ratio. The ratio is controlled by the pump/motor size. This dispense temperature of the material is in the range of 15 to 45°C and preferred at 25°C for both sides. The dispense pressure at 25°C material temperature is in the range of 100 to 180 bar. Material dispense flow rate is in the range of 50 to 800 g/s at the mix-head.

The isocyanate:polyol mixing ratio by weight for each Examples 1 to 5 are listed in Table 2.

For Examples 1 to 5 formulated A-side (comprising isocyanate and other additives) and B-side (polyol blend comprising polyols and other additives) is made from the following components. Amounts are given as weight % based on the total weight of the A-side or B-side, respectively. In Table 1:
"Polyol-1" is a sucrose/glycerine-initiated, polyoxyethylene-capped polyoxypropylene polyol, having an equivalent weight around 1725, a nominal functionality of around 4.7, a polyoxyethylene capped percentage around 15 %, and a hydroxyl number of around 32 available as SPECFLEX NC 632 from The Dow Chemical Company;
"Polyol-2" is a grafted polyether polyol containing 40 wt% copolymerized styrene and acrylonitrile solids and an OH number of 22 mg KOH/g available as SPECFLEX^{™} NC-701 from The Dow Chemical Company;
"Polyol-3" is an amine-initiated, autocatalytic polyether polyol, having nominal functionality of around 4 and a hydroxyl number of between 31.0 and 40.0 available as SPECFLEX ACTIV^{™} 2306 from The Dow Chemical Company;
"Polyol-4" is an amine-initiated, autocatalytic polyoxyethylene-capped polyoxypropylene polyol, having an equivalent weight around 1,700, a nominal functionality of around 4, a polyoxyethylene capped percentage around 17.5 %, and a hydroxyl number of around 33 available as VORANOL^{™} VORACTIV^{™} VM 779 from The Dow Chemical Company;
"DEOA" is diethanolamine, a crosslinker, available from Aldrich;
"Glycerine" is a crosslinker available from Vitusa Products Inc.;
"RZETA" is 1,4-diazabicyclo[2.2.2]octane-2-methanol available as RZETA^{™} from Tosoh Corporation;
"ZF-10" is N,N,N'-trimethyl-N'-hydroxyethyl-bisaminoethylether available as JEFFCAT ZF-10 from Huntsman Corporation;
"B 8736" is an organosilicone surfactant available as TEGOSTAB B 8736 from Evonik Industries/Goldschmidt Chemical Corporation; and
"TDI" is toluene diisocyanate having a functionality of 2 with an isocyanate equivalent weight of 87, available as VORANATE T-80 Type I TDI from The Dow Chemical Company.

**Table 1**

| | Example | 1 | 2 | 3 | 4 | 5 |
|---|---|---|---|---|---|---|
| A-Side, parts | | | | | | |
| | TDI | 100 | 100 | 100 | 100 | 100 |

| B-Side, parts | | | | | | |
|---|---|---|---|---|---|---|
| | Polyol-1 | 74.5 | 74.5 | 74.46 | 49.45 | 49.55 |
| | Polyol-2 | 15 | 15 | 15 | 25 | 25 |
| | Polyol-3 | 5 | 5 | 5 | | |
| | Polyol-4 | | | | 20 | 20 |
| | DEOA | 0.6 | 0.6 | 0.6 | 0.6 | 0.6 |
| | Glycerine | 0.5 | 0.5 | 0.5 | 0.5 | 0.5 |
| | RZETA | 0.25 | 0.4 | 0.32 | 0.4 | 0.25 |
| | ZF-10 | 0.15 | 0.1 | 0.12 | 0.1 | 0.15 |
| | B 87836 | 0.6 | 0.6 | 0.6 | 0.55 | 0.55 |
| | Water | 3.4 | 3.4 | 3.4 | 3.4 | 3.4 |
| | Total | 100 | 100 | 100 | 100 | 100 |

Foam properties determined according to the following test methods are listed for Examples 1 to 5 in Table 2.
"Density" is determined according to ISO 845;
"F" at 25% and 65% is CLD (Compression Load Deflection) determined according to ISO 3386-1;
"SAG" is an indicator of cushioning quality, high values are associated to resistance to "bottoming out" (= ratio F65% / F25%) determined according to ISO 3386-1;
"Hysteresis" is determined according to ISO 3386-1;
"Tensile Strength" and "Elongation" are determined according to ISO 71798;
"Tear Strength" is determined according to Renault D41 1048;
"CS" is dry compression set testing performed with the foam compressed to 70% according Renault D45 1046; and
"WCS" is wet compression set testing performed with the foam compressed to 70% according Renault D41 1637.

**Table 2**

| | A-side:B-side ratio, | Density, kg/m³ | F (25%), kPa | F (65%), kPa | SAG | Hysteresis, % | Tensile Strength, kPa | Elongation, % | Tear Strength, N/m | CS, % | WCS, % |
|---|---|---|---|---|---|---|---|---|---|---|---|
| Example 1 | | | | | | | | | | | |
| 70 Index | 29.2 : 100 | 48.40 | 2.42 | 6.87 | 2.84 | 79.91 | 91.29 | 95.00 | 185.43 | 31.22 | 61.18 |
| 80 Index | 33.3 : 100 | 46.86 | 3.29 | 8.73 | 2.66 | 80.95 | 130.18 | 117.50 | 199.11 | 22.83 | 28.95 |
| 90 Index | 37.5:100 | 46.34 | 3.71 | 9.6 | 2.58 | 82.38 | 168.38 | 102.00 | 165.56 | 19.43 | 24.17 |
| 100 Index | 41.7 : 100 | 48.50 | 4.63 | 12.1 | 2.62 | 82.09 | 142.96 | 86.90 | 153.40 | 14.67 | 23.45 |

| Example 2 | | | | | | | | | | | |
|---|---|---|---|---|---|---|---|---|---|---|---|
| 70 Index | 29.2 : 100 | 44.98 | 2.19 | 5.97 | 2.73 | 80.50 | 129.28 | 133.70 | 155.41 | 28.03 | 49.51 |
| 80 Index | 33.4:100 | 46.86 | 3.03 | 8.42 | 2.78 | 81.74 | 135.17 | 107.20 | 184.90 | 24.59 | 27.93 |
| 90 Index | 37.5:100 | 47.73 | 4.02 | 10.55 | 2.63 | 81.91 | 153.80 | 108.20 | 178.21 | 22.73 | 25.25 |
| 100 Index | 41.7 : 100 | 46.26 | 4.62 | 11.73 | 2.54 | 82.50 | 133.89 | 76.00 | 160.91 | 19.30 | 20.35 |

| Example 3 | | | | | | | | | | | |
|---|---|---|---|---|---|---|---|---|---|---|---|
| 70 Index | 29.2 : 100 | 46.92 | 2.09 | 6.01 | 2.88 | 80.13 | 127.27 | 139.20 | 188.66 | 25.52 | 66.84 |
| 80 Index | 33.3 : 100 | 46.20 | 3.09 | 8.01 | 2.59 | 83.04 | 139.71 | 122.10 | 188.48 | 24.75 | 25.32 |
| 90 Index | 37.5:100 | 45.88 | 3.67 | 9.54 | 2.60 | 82.81 | 153.35 | 100.20 | 139.02 | 17.06 | 23.01 |
| 100 Index | 41.7 : 100 | 46.81 | 4.59 | 11.66 | 2.54 | 82.76 | 164.04 | 91.30 | 151.38 | 16.15 | 20.77 |

| Example 4 | | | | | | | | | | | |
|---|---|---|---|---|---|---|---|---|---|---|---|
| 70 Index | 29.1:100 | 46.56 | 2.70 | 7.46 | 2.76 | 80.83 | 145.77 | 143.60 | 235.73 | 23.35 | 29.97 |
| 80 Index | 33.2:100 | 46.19 | 3.61 | 9.60 | 2.66 | 80.82 | 177.02 | 117.10 | 227.17 | 21.91 | 23.69 |
| 90 Index | 37.4:100 | 46.45 | 4.59 | 11.82 | 2.58 | 80.53 | 182.68 | 101.00 | 210.79 | 19.77 | 21.00 |
| 100 Index | 41.5 : 100 | 47.11 | 5.71 | 14.67 | 2.56 | 79.50 | 171.99 | 81.90 | 220.05 | 18.95 | 22.09 |

| Example 5 | | | | | | | | | | | |
|---|---|---|---|---|---|---|---|---|---|---|---|
| 70 Index | 29.0 : 100 | 44.47 | 3.11 | 8.13 | 2.62 | 79.53 | 69.71 | 83.90 | 303.54 | 24.22 | 39.20 |
| 80 Index | 33.2 : 100 | 45.19 | 3.90 | 10.06 | 2.58 | 80.68 | 161.5 | 188.40 | 262.46 | 21.00 | 22.73 |
| 90 Index | 37.3 : 100 | 46.37 | 4.99 | 12.68 | 2.54 | 79.64 | 181.8 | 104.10 | 283.24 | 21.78 | 22.14 |
| 100 Index | 41.5 : 100 | 47.37 | 6.02 | 15.07 | 2.50 | 79.66 | 183.86 | 89.90 | 220.36 | 20.69 | 20.58 |

## Claims

1. A process to form a flexible polyurethane foam, comprising the reaction product of:
a) an A-side comprising
i) an organic isocyanate,
b) a B-side comprising:
i) 5 to 40 weight percent of a copolymer polyol,
ii) 30 to 95 weight percent of a polyether polyol having a functionality equal to or greater than 3,
iii) 1 to 30 weight percent of an autocatalytic polyol,
iv) 0.1 to 5 weight percent of a crosslinker,
v) 0.1 to 5 weight percent of a surfactant,
vi) 0.01 to 2 weight percent of a hydroxyalkyltriethylenediamine and/or a hydroxytriethylenediamine catalyst,
vii) 0.01 to 2 weight percent of a tertiary amine catalyst, and
viii) 1 to 5 weight percent water, the B-side weight percents are based on the total weight of the B-side, said process comprising the steps of:
A) forming a reactive blend by mixing said A-side and said B-side at 55°C or less in a ratio, (A-side):(B-side), of 20:100 to 80:100 by weight; and
B) subjecting the resulting reactive blend to conditions sufficient to cure the reactive blend to form a polyurethane foam.

2. The process of Claim 1 wherein the organic isocyanate is 2,4-toluene diisocyanate, 2,6-toluene diisocyanate, a mixture of 2,4-toluene diisocyanate and 2,6-toluene diisocyanate; 2,4'-diphenylmethane diisocyanate, 2,2'- diphenylmethane diisocyanate, 4,4'-diphenylmethane diisocyanate, a mixture of 2,4'-diphenylmethane diisocyanate, 2,2'-diphenylmethane diisocyanate, 4,4'-diphenylmethane diisocyanate; or mixtures thereof.

3. The process of Claim 1 wherein the crosslinker iv) comprises 0.1 to 5 weight percent diethanolamine and 0.1 to 5 weight percent glycerine.

4. The process of Claim 1 wherein the hydroxyalkyltriethylenediamine catalyst b)vi) is 1,4-diazabicyclo[2.2.2]octane-2-methanol and the tertiary amine catalyst b)vii) is N,N,N'-trimethyl-N'-hydroxyethyl-bisaminoethylether.

5. The process of Claim 2 wherein the ratio of b)vi):b)vii) is within the range of 60:10 to 10:10.

6. The process of Claim 1 wherein the flexible polyurethane foam is used in a low emission automobile seating application.

## Patentansprüche

1. Ein Verfahren zum Bilden eines Polyurethanweichschaums, beinhaltend das Reaktionsprodukt von Folgendem:
a) einer A-Seite, beinhaltend:
i) ein organisches Isocyanat,
b) einer B-Seite, beinhaltend:
i) zu 5 bis 40 Gewichtsprozent ein Copolymerpolyol,
ii) zu 30 bis 95 Gewichtsprozent ein Polyetherpolyol mit einer Funktionalität gleich oder größer als 3,
iii) zu 1 bis 30 Gewichtsprozent ein autokatalytisches Polyol,
iv) zu 0,1 bis 5 Gewichtsprozent einen Vernetzer,
v) zu 0,1 bis 5 Gewichtsprozent ein Tensid,
vi) zu 0,01 bis 2 Gewichtsprozent einen Hydroxyalkyltriethylendiamin-und/oder einen Hydroxytriethylendiaminkatalysator,
vii) zu 0,01 bis 2 Gewichtsprozent einen Tertiäramin-Katalysator und
viii) zu 1 bis 5 Gewichtsprozent Wasser,
wobei sich die Gewichtsprozente der B-Seite auf das Gesamtgewicht der B-Seite beziehen,
wobei das Verfahren die folgenden Schritte beinhaltet:
A) Bilden eines reaktiven Gemischs durch Mischen der A-Seite und der B-Seite bei 55 °C oder weniger in einem Verhältnis (A-Seite) : (B-Seite) von 20 : 100 bis 80 : 100 nach Gewicht; und
B) Aussetzen des resultierenden reaktiven Gemischs gegenüber Bedingungen, die ausreichen, um das reaktive Gemisch auszuhärten, um einen Polyurethanschaum zu bilden.

2. Verfahren gemäß Anspruch 1, wobei das organische Isocyanat Folgendes ist: 2,4-Toluoldiisocyanat, 2,6-Toluoldiisocyanat, eine Mischung von 2,4-Toluoldiisocyanat und 2,6-Toluoldiisocyanat; 2,4'-Diphenylmethandiisocyanat, 2,2'-Diphenylmethandiisocyanat, 4,4'-Diphenylmethandiisocyanat, eine Mischung von 2,4'-Diphenylmethandiisocyanat, 2,2'-Diphenylmethandiisocyanat, 4,4'-Diphenylmethandiisocyanat; oder Mischungen davon.

3. Verfahren gemäß Anspruch 1, wobei der Vernetzer iv) zu 0,1 bis 5 Gewichtsprozent Diethanolamin und zu 0,1 bis 5 Gewichtsprozent Glycerin beinhaltet.

4. Verfahren gemäß Anspruch 1, wobei der Hydroxyalkyltriethylendiaminkatalysator b)vi) 1,4-Diazabicyclo[2.2.2]octan-2-methanol ist und der Tertiäramin-Katalysator b)vii) N,N,N'-Trimethyl-N'-hydroxyethyl-bisaminoethylether ist.

5. Verfahren gemäß Anspruch 2, wobei das Verhältnis von b)vi) : b)vii) innerhalb des Bereichs von 60 : 10 bis 10 : 10 liegt.

6. Verfahren gemäß Anspruch 1, wobei der Polyurethanweichschaum in einer emissionsarmen Automobilsitzanwendung verwendet wird.

## Revendications

1. Un procédé pour former une mousse de polyuréthane souple, comprenant le produit de la réaction :
a) d'un côté A comprenant
i) un isocyanate organique,
b) d'un côté B comprenant :
i) de 5 à 40 pour cent en poids d'un polyol de copolymère,
ii) de 30 à 95 pour cent en poids d'un polyol de polyéther ayant une fonctionnalité égale ou supérieure à 3,
iii) de 1 à 30 pour cent en poids d'un polyol autocatalytique,
iv) de 0,1 à 5 pour cent en poids d'un agent de réticulation,
v) de 0,1 à 5 pour cent en poids d'un tensioactif,
vi) de 0,01 à 2 pour cent en poids d'un catalyseur hydroxyalkyltriéthylènediamine et/ou hydroxytriéthylènediamine,
vii) de 0,01 à 2 pour cent en poids d'un catalyseur amine tertiaire, et
viii) de 1 à 5 pour cent en poids d'eau,
les pourcentages en poids du côté B sont rapportés au poids total du côté B, ledit procédé comprenant les étapes consistant à :
A) former un mélange homogène réactif en mélangeant ledit côté A et ledit côté B à 55 °C ou moins dans un rapport, (côté A)/(côté B), allant de 20/100 à 80/100 en poids ; et
B) soumettre le mélange homogène réactif résultant à des conditions suffisantes pour durcir le mélange homogène réactif afin de former une mousse de polyuréthane.

2. Le procédé de la revendication 1 dans lequel l'isocyanate organique est le 2,4-diisocyanate de toluène, le 2,6-diisocyanate de toluène, un mélange de 2,4-diisocyanate de toluène et de 2,6-diisocyanate de toluène ; le 2,4'-diisocyanate de diphénylméthane, le 2,2'-diisocyanate de diphénylméthane, le 4,4'-diisocyanate de diphénylméthane, un mélange de 2,4'-diisocyanate de diphénylméthane, de 2,2'-diisocyanate de diphénylméthane, de 4,4'-diisocyanate de diphénylméthane ; ou des mélanges de ceux-ci.

3. Le procédé de la revendication 1 dans lequel l'agent de réticulation iv) comprend de 0,1 à 5 pour cent en poids de diéthanolamine et de 0,1 à 5 pour cent en poids de glycérine.

4. Le procédé de la revendication 1 dans lequel le catalyseur
hydroxyalkyltriéthylènediamine b)vi) est le 1,4-diazabicyclo[2.2.2]octane-2-méthanol et le catalyseur amine tertiaire b)vii) est le N,N,N'-triméthyl-N'-hydroxyéthyl-bisaminoéthyléther.

5. Le procédé de la revendication 2 dans lequel le rapport de b)vi)/b)vii) est compris dans la gamme allant de 60/10 à 10/10.

6. Le procédé de la revendication 1 dans lequel la mousse de polyuréthane souple est utilisée dans une application pour siège automobile à faibles émissions.
